# EUROPÄISCHE PATENTSCHRIFT

(11) **EP 2 892 731 B1**
(45) Veröffentlichungstag und Bekanntmachung des Hinweises auf die Patenterteilung: **14.09.2016**
(21) Anmeldenummer: 13741778.8
(22) Anmeldetag: 29.07.2013
(51) Int. Cl.: B60C 5/14, B60C 19/12

(54) **FAHRZEUGLUFTREIFEN**
PNEUMATIC VEHICLE TYRE
PNEUMATIQUES POUR VÉHICULE

(30) Priorität: 07.09.2012 DE 102012108343
(43) Veröffentlichungstag der Anmeldung: 15.07.2015
(73) Patentinhaber: Continental Reifen Deutschland GmbH, 30165 Hannover (DE)
(72) Erfinder: BÄUNING, Daniel, 30161 Hannover (DE); DOMSCHEIT, Andreas, 30459 Hannover (DE)
(74) Vertreter: Finger, Karsten
(86) Internationale Anmeldenummer: PCT/EP2013/065859
(87) Internationale Veröffentlichungsnummer: WO 2014/037154

(56) Entgegenhaltungen:
- EP-A1- 1 424 221
- WO-A1-2011/032886
- JP-A- H0 490 902

## Beschreibung

Die Erfindung betrifft einen selbstdichtenden Fahrzeugluftreifen mit einem Gürtelpaket, einem radial oberhalb des Gürtelpakets angeordneten Laufstreifen und einer radial innen angeordneten luftdicht ausgeführten Innenschicht, wobei die Selbstdichtung des Fahrzeugluftreifens durch eine nach der Vulkanisation des Fahrzeugluftreifens nachträglich radial innen aufgebrachten Dichtmittellage erhalten ist, wobei die Dichtmittellage in etwa die Breite des Gürtelpakets aufweist und in etwa in dessen Projektion angeordnet ist.

Derartige selbstdichtend ausgestaltete Fahrzeugluftreifen sind beispielsweise aus der DE 10 2006 059 286 A1 der Anmelderin bekannt. Hierbei werden Reifen-Standardkonstruktionen nachträglich mit einer Dichtmittellage versehen. Das Dichtmittel ist eine selbsthaftende, viskose Dichtmasse, welche von radial innen im Projektionsbereich des Gürtelpakets auf die radial innerste Reifenlage, die weitgehend luftdicht ausgeführte Innenschicht, als Lage aufgetragen wird. Die Dichtmittelschicht ist in der Lage, Einstiche von bis zu fünf Millimetern Durchmesser selbständig abzudichten. Nach einem Durchstich durch den Laufstreifen bis durch die Innenschicht umschließt das Dichtmittel den eingedrungenen Fremdkörper vollständig, dichtet den Innenraum gegenüber der Umgebung ab und verhindert so einen Druckluftverlust des Reifens. Der Fahrer des Fahrzeuges ist nicht gezwungen, den defekten Reifen sofort durch ein vollwertiges Ersatzrad oder ein Notrad zu ersetzen.

Das Dichtmittel wird von der Anmelderin unter dem Namen ContiSeal ® eingesetzt. Das Dichtmittel zeichnet sich durch Luftdichtigkeit, starke Klebrigkeit und ausgewogenes Fließverhalten aus.

Ein selbstdichtender Fahrzeugluftreifen ist auch aus der EP-A-1424221 bekannt.

Man ist ständig bestrebt, Materialkosten bei der Reifenherstellung einzusparen, ohne die Eigenschaften des Reifens nachteilig zu verändern.

Es ist die Aufgabe der Erfindung, einen selbstdichtenden Fahrzeugluftreifen bereitzustellen, bei dem an Materialkosten bei der Reifenherstellung eingespart ist, ohne dass die Eigenschaften des Reifens nachteilig verändert sind.

Die Aufgabe wird gelöst, indem die Innenschicht 2-teilig ausgeführt ist, so dass in etwa radial oberhalb der Dichtmittellage um den Reifenumfang umlaufend keine Innenschicht angeordnet ist.

Der erfindungsgemäße Fahrzeugluftreifen weist eine Innenschicht auf, die oberhald des Dichtmittels ausgespart ist, also oberhalb des Dichtmittels fehlt. Das Dichtmittel ist von sich aus luftdicht, so dass im Bereich des Dichtmittels keine Innenschicht erforderlich ist, um die Luftdichtigkeit des Fahrzeugluftreifens herzustellen. Somit besteht die Innenschicht aus zwei über den Umfang umlaufenden Teilen, welche außerhalb der Dichtmittelschicht die Luftdichtigkeit des Reifens herstellen. Die Innenschicht ist üblicherweise aus (Halo-) Butylkautschuk hergestellt. Durch das Weglassen der Innenschicht oberhalb der Dichtmittelschicht ist an Material und Kosten eingespart.

Vorteilhaft ist es, wenn die der Innenschicht zugewandten Kanten der Dichtmittelschicht mit der Innenschicht überlappend angeordnet sind. Hierdurch ist die Luftdichtigkeit auch im Bereich von Herstellungstoleranzen sichergestellt.

Es ist zweckmäßig, wenn die Breite der Überlappung der Dichtmittelschicht mit der Innenschicht etwa 2 mm - 30 mm, vorzugsweise etwa 10 mm beträgt.

Weitere Merkmale, Vorteile und Einzelheiten der Erfindung werden anhand der einzigen Figur, die ein schematisches Ausführungsbeispiel darstellt, näher erläutert.

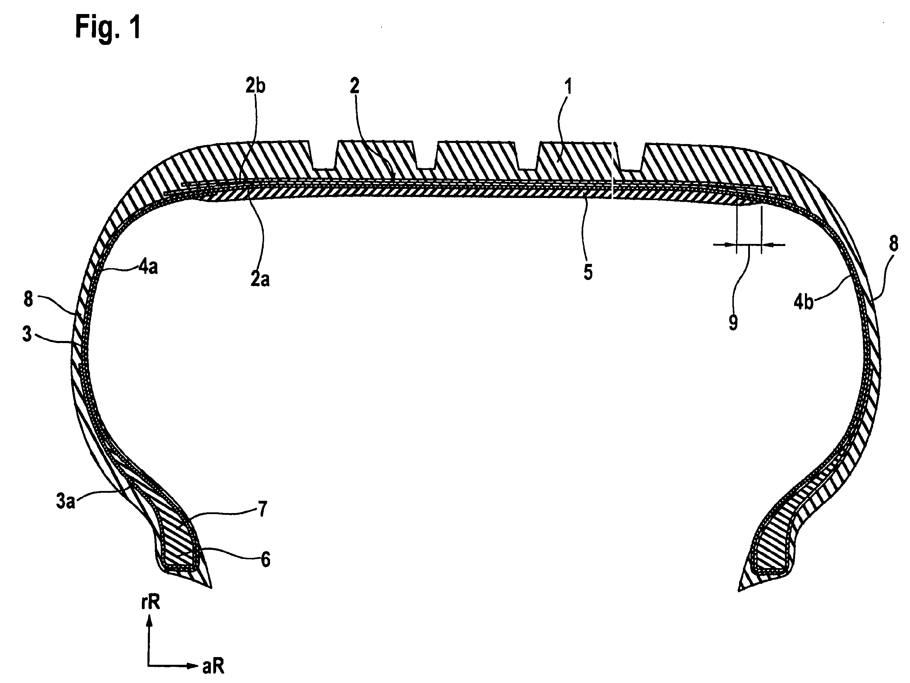

Die Fig. 1 zeigt einen Querschnitt durch einen erfindungsgemäßen Fahrzeugluftreifen mit Dichtmittelschicht.

Die wesentlichen Bestandteile, aus welchen sich der erfindungsgemäße selbstdichtende Reifen zusammensetzt, sind ein profilierter Laufstreifen 1, ein bei der gezeigten Ausführung aus zwei Lagen 2a, 2b bestehendes Gürtelpaket 2, eine einlagige Karkasse 3, welche um die Wulstkerne 6 und Wulstkernprofile 7 von axial innen nach axial außen herumgeführt ist und im Karkasshochschlag 3a endet, sowie Seitenwände 8. Die beiden Lagen 2a, 2b des Gürtelpakets 2 bestehen aus in eine Gummimischung eingebetteten Festigkeitsträgern aus Stahlcord, welche innerhalb jeder Lage parallel zueinander verlaufen, wobei die Stahlcorde der einen Lage 2a in kreuzender Anordnung zu den Stahlcorden der zweiten Lage 2b orientiert sind und mit der Reifenumfangsrichtung jeweils einen Winkel zwischen 15° und 45° einschließen. Auch die einlagige Karkasse 3 kann in herkömmlicher und bekannter Weise ausgeführt sein und somit in eine Gummimischung eingebettete, in radialer Richtung verlaufende Verstärkungsfäden aus einem textilen Material oder aus Stahlcord aufweisen. Die Selbstdichtung des Fahrzeugluftreifens ist durch eine nach der Vulkanisation des Fahrzeugluftreifens nachträglich radial innen aufgebrachte Dichtmittellage 5 erhalten. Die Dichtmittellage 5 weist in etwa die Breite des Gürtelpakets 2 auf und ist in etwa in dessen Projektion angeordnet. Die Innenschicht 4a, 4b ist 2-teilig ausgeführt, so dass in etwa radial oberhalb der Dichtmittellage 5 um den Reifenumfang umlaufend keine Innenschicht angeordnet ist. Die der Innenschicht 4a, 4b zugewandten Kanten der Dichtmittelschicht 5 sind mit der Innenschicht 4a, 4b überlappend angeordnet, wobei die Dichtmittelschicht 5 die Kanten Innenschicht 4a, 4b überdeckt. Die Breite der Überlappung 9 der Dichtmittelschicht 5 mit der Innenschicht 4a, 4b, gemessen in axialer Richtung, beträgt etwa 2 mn - 30 mm, vorzugsweise etwa 10 mm.

### Bezugszeichenliste

### (Teil der Beschreibung)

- 1: Laufstreifen
- 2: Gürtelpaket
- 2a: Gürtellage
- 2b: Gürtellage
- 3: Karkasse
- 3a: Karkasshochschlag
- 4a: Innenschicht
- 4b: Innenschicht
- 5: Dichtmittellage
- 6: Wulstkern
- 7: Wulstkernprofil
- 8: Seitenwand
- 9: Breite der Überlappung

- rR: radiale Richtung
- aR: axiale Richtung

## Patentansprüche

1. Selbstdichtender Fahrzeugluftreifen mit einem Gürtelpaket (2), einem radial oberhalb des Gürtelpakets (2) angeordneten Laufstreifen (1) und einer radial innen angeordneten luftdicht ausgeführten Innenschicht (4a, 4b), wobei die Selbstdichtung des Fahrzeugluftreifens durch eine nach der Vulkanisation des Fahrzeugluftreifens nachträglich radial innen aufgebrachten Dichtmittellage (5) erhalten ist, wobei die Dichtmittellage (5) in etwa die Breite des Gürtelpakets (2) aufweist und in etwa in dessen Projektion angeordnet ist, **dadurch gekennzeichnet, dass** die Innenschicht (4a, 4b) 2-teilig ausgeführt ist, so dass in etwa radial oberhalb der Dichtmittellage (5) um den Reifenumfang umlaufend keine Innenschicht angeordnet ist.

2. Selbstdichtender Fahrzeugluftreifen nach Anspruch 1, **dadurch gekennzeichnet, dass** die der Innenschicht (4a, 4b) zugewandten Kanten der Dichtmittelschicht (5) mit der Innenschicht (4a, 4b) überlappend angeordnet sind.

3. Selbstdichtender Fahrzeugluftreifen nach Anspruch 2, **dadurch gekennzeichnet, dass** die Breite der Überlappung (9) der Dichtmittelschicht (5) mit der Innenschicht (4a, 4b) etwa 2 mm - 30 mm, vorzugsweise etwa 10 mm beträgt.

## Claims

1. Self-sealing pneumatic vehicle tyre having a belt assembly (2), a tread (1) arranged radially above the belt assembly (2), and a radially internally arranged, airtight inner liner (4a, 4b), wherein the self-sealing of the pneumatic vehicle tyre is obtained by means of a sealant layer (5) which is retrospectively applied radially internally after vulcanization of the pneumatic vehicle tyre, wherein the sealant layer (5) has approximately the width of the belt assembly (2) and is arranged approximately in the projection thereof, **characterized in that** the inner liner (4a, 4b) is embodied in 2 parts such that no inner liner is arranged approximately radially above the sealant layer (5) around the tyre circumference.

2. Self-sealing pneumatic vehicle tyre according to Claim 1, **characterized in that** those edges of the sealant layer (5) which face the inner liner (4a, 4b) are arranged so as to overlap with the inner liner (4a, 4b).

3. Self-sealing pneumatic vehicle tyre according to Claim 2, **characterized in that** the width of the overlap (9) of the sealant layer (5) with the inner liner (4a, 4b) is approximately 2 mm-30 mm, preferably approximately 10 mm.

## Revendications

1. Pneumatique pour véhicules à auto-étanchéité comprenant un ensemble de ceinture (2), une bande de roulement (1) disposée au-dessus de l'ensemble de ceinture (2) et une couche radialement interne réalisée sous forme étanche à l'air (4a, 4b), l'auto-étanchéité du pneumatique pour véhicules étant obtenue par une couche d'agent d'étanchéité (5) appliquée radialement à l'intérieur ultérieurement après la vulcanisation du pneumatique pour véhicules, la couche d'agent d'étanchéité (5) présentant approximativement la largeur de l'ensemble de ceinture (2) et étant disposée approximativement dans la projection de celui-ci, **caractérisé en ce que** la couche interne (4a, 4b) est réalisée en deux parties, de telle sorte qu'aucune couche interne ne soit disposée approximativement radialement au-dessus de la couche d'agent d'étanchéité (5) autour de la périphérie du pneu.

2. Pneumatique pour véhicules à auto-étanchéité selon la revendication 1, **caractérisé en ce que** les bords de la couche d'agent d'étanchéité (5) tournés vers la couche interne (4a, 4b) sont disposés de manière à chevaucher la couche interne (4a, 4b).

3. Pneumatique pour véhicules à auto-étanchéité selon la revendication 2, **caractérisé en ce que** la largeur du chevauchement (9) de la couche d'agent d'étanchéité (5) avec la couche interne (4a, 4b) vaut approximativement 2 mm - 30 mm, de préférence environ 10 mm.
